# EUROPEAN PATENT APPLICATION

(11) **EP 2 579 140 A1**
(43) Date of publication of application: **10.04.2013**
(21) Application number: 11789738.9
(22) Date of filing: 30.05.2011
(51) Int. Cl.: G06F 3/048

(54) **ELECTRONIC DEVICE USING TOUCH PANEL INPUT AND METHOD FOR RECEIVING OPERATION THEREBY**

(30) Priority: 31.05.2010 JP 2010124623
(71) Applicant: NEC Corporation, Tokyo 108-8001 (JP)
(72) Inventor: MORIYAMA Takashi, Tokyo 108-8001 (JP)
(74) Representative: Vossius & Partner
(86) International application number: PCT/JP2011/062328
(87) International publication number: WO 2011/152335

(57) **Abstract**

Provided are a display, which displays a screen, and a touch panel, which is disposed on the display. In accordance with a series of consecutive operations by a user to the touch panel involving touch operation, drag operation, and release operation, the following are accepted: the selection of an action area from among one or more action areas displayed on the basis of a touched area on the touch panel at the time of a user's touch operation, and the execution of an action corresponding to the action area.

## Description

### {Technical Field}

The present invention relates to an electronics device that uses a touch panel for inputting, and a method of accepting an operation using the electronics device.

### {Background Art}

In general, according to a method of inputting using a touch panel, intuitive operation is possible; however, with touch/release, the executable action is limited to one type. In most cases, the operation is assigned to an action for selecting/determining a touch area; it is not possible to use the above operation while using other actions properly. For example, when a link destination is to be selected on a browser, there is demand for displaying the contents of a linked page in another window. However, in many cases, the mode is switched from a function menu, which is provided separately, before the link destination is selected.

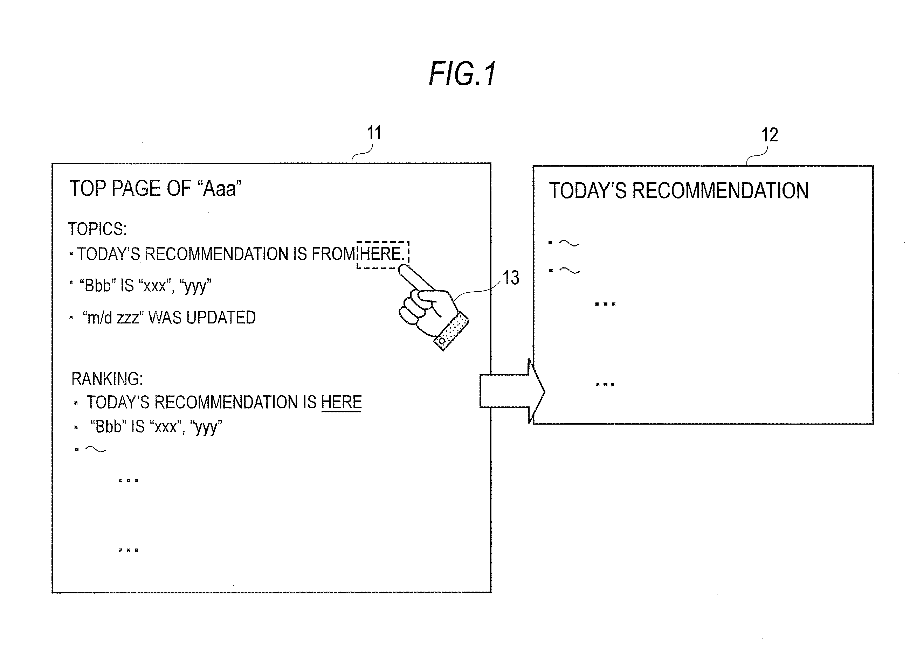

More specifically, when a hyperlink (referred to as a link, hereinafter) of a WEB page (homepage) now being displayed is selected with the help of a browser function or the like that has a touch panel as shown in FIG. 1, a display screen 11 of the WEB page is touched by a finger 13, and then is switched to a display screen 12 of a linked WEB page. An operation of opening the linked page in another window, an operation of saving the linked page, and any other operation cannot be performed in a series of operations such as selecting a link destination after the changing of a selection mode that is provided separately.

As a device that uses a conventional way of inputting through a touch panel, for example, there are those disclosed in PTL 1 to 5 and the like. What is disclosed in PTL 1 is as follows: in response to a first touch, a plurality of menu items are circularly displayed with a touched position as the center thereof; and in response to a second touch, a menu item is selected. According to the method of PTL 1, the first touch operation is conducted to display the menu items, and the second touch operation to select a menu item. Therefore, the method of PTL 1 is not a method of displaying an action area, selecting, and initiating the execution of an action in accordance with a series of consecutive operations involving touch operation, drag operation, and release operation.

What is disclosed in PTL 2 is as follows: at the time of operating a touch panel, a pointer is displayed at a touched position of the panel; at a position adjacent to the pointer, a selection menu is displayed to allow operations, such as those equivalent to a left click, right click, drag, and other kinds of operation on a mouse, to be performed; and operations equivalent to those on a mouse are carried out by selecting displayed items of the selection menu by a finger, touch pen, or the like. The method of PTL 2 is to allow for operations equivalent to operations on a touch panel by displaying, around a touched position, a selection menu that enables a left click, right click, drag, and other kinds of operation to be performed. Therefore, like PTL 1, the method of PTL 2 is not a method of displaying an action area, selecting, and initiating the execution of an action in accordance with a series of consecutive operations involving touch operation, drag operation, and release operation.

What is disclosed in PTL 3 is as follows: on a display, a circular menu display pattern is displayed; and a cursor is moved to the position of a to-be-selected menu item, out of menu items of the displayed menu display pattern, to indicate the menu item. The method of PTL 3 is to circularly display menu items on the display and allow a menu item to be selected as the cursor moves. Therefore, the method of PTL3 is not a method of displaying an action area, selecting, and initiating the execution of an action in accordance with a series of consecutive operations involving touch operation, drag operation, and release operation. There are also PTL 4, PTL 5, and the like.

### {Citation List}

### {Patent Literature}

{PTL1} JP-A-2006-139615
{PTL2} JP-A-2007-226571
{PTL3} JP-A-63-284624
{PTL4} JP-A-2005-018792
{PTL 5} JP-A-2008-016056

### {Summary of Invention}

### {Technical Problem}

According to the technologies of PTLs 1 to 5, as described above, on a browser function or the like that includes a touch panel, an operation of opening a linked page in another window, an operation of saving a linked page, and any other operation cannot be performed in a series of operations such as selecting a link destination after the changing of a selection mode that is provided separately.

The reason is that the conventional technologies are not intended to accept operations in accordance with a series of operations involving touch operation, drag operation, and release operation since a process of displaying a menu item, a process of selecting a menu item, and any other process are performed each time touch operation is conducted.

An exemplary object of the present invention is to provide an electronics device using touch panel input that can perform operations from displaying an action area to initiating the execution of an action in response to a series of consecutive operations involving touch operation, drag operation, and release operation, and can improve operability; and a method of accepting an operation using the electronics device.

### {Solution to Problem}

An electronics device using touch panel input according to a first exemplary aspect of the present invention includes:
a display which displays a screen;
a touch panel which is disposed on the display; and
a controller which controls the display so that one or more action areas corresponding to a touched area of the touch panel are displayed in response to touch operation onto the touch panel, and which accepts selection of the action area from among the one or more action areas displayed and execution of an action corresponding to the action area, in accordance with drag and release operations that come after the touch operation.

An operation accepting method of an electronics device using touch panel input according to a second exemplary aspect of the present invention is used for the electronics device including a display that has a display screen, a touch panel that is disposed on the display, and a controller that is connected to the display and the touch panel, and the method includes:
an operation accepting step of controlling, by the controller, the display so that one or more action areas corresponding to a touched area of the touch panel are displayed in response to touch operation onto the touch panel, and accepting, by the controller, selection of the action area from among the one or more action areas displayed and execution of an action corresponding to the action area, in accordance with drag and release operations that come after the touch operation.

### {Advantageous Effects of Invention}

According to the present invention, in a series of operations by a user involving touch operation, drag operation, and release operation, an operation of extracting an action area, an operation of displaying an action area, an operation of selecting an action area, and an operation of executing an action can be performed, resulting in a remarkable improvement in operability.

### {Brief Description of Drawings}

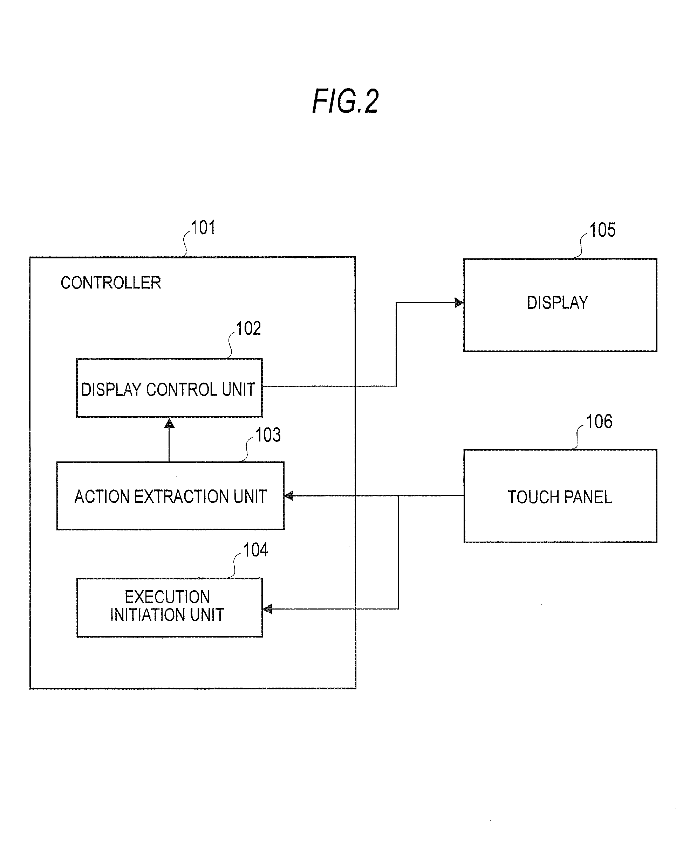

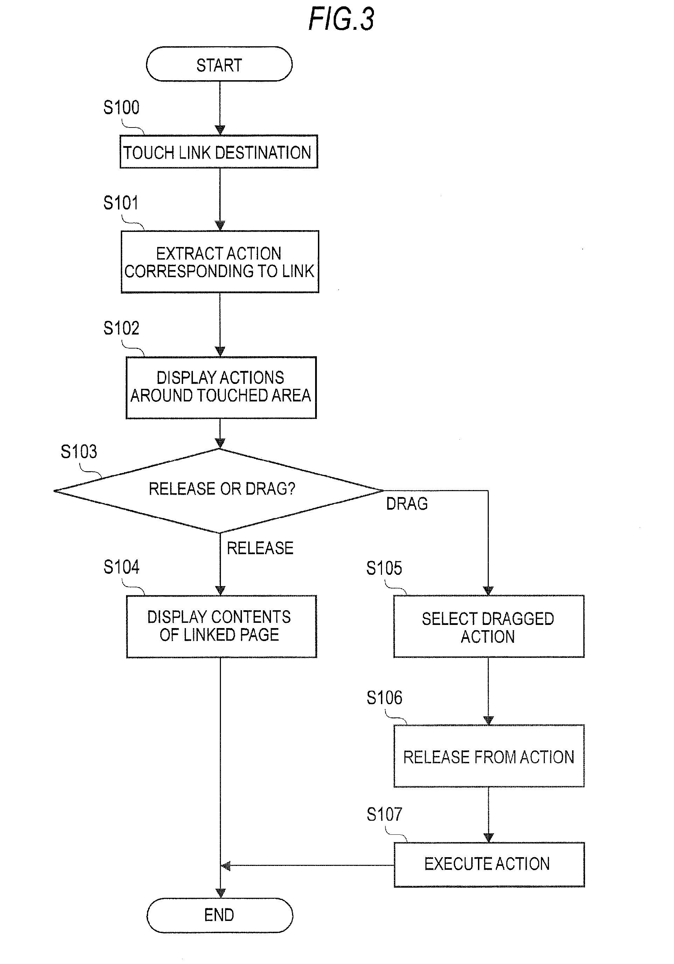

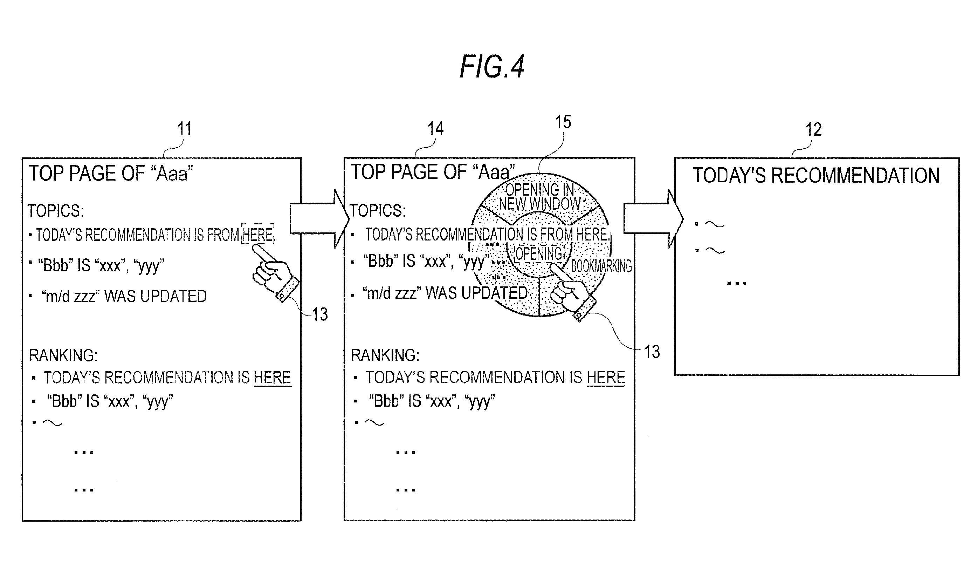

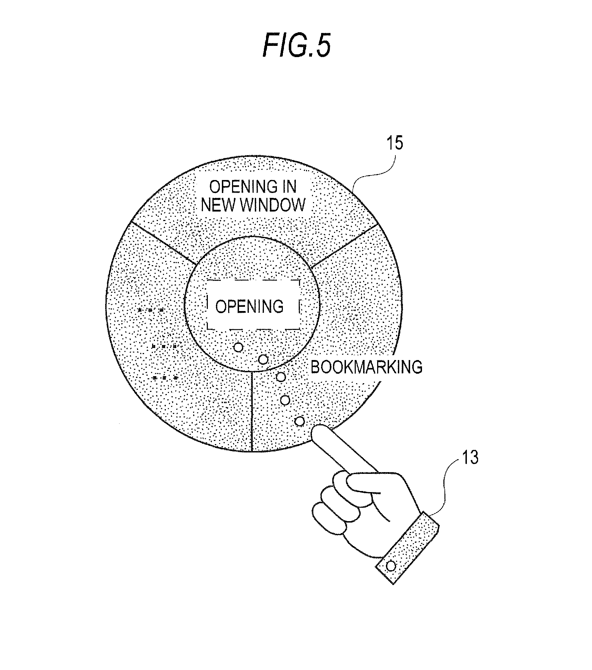

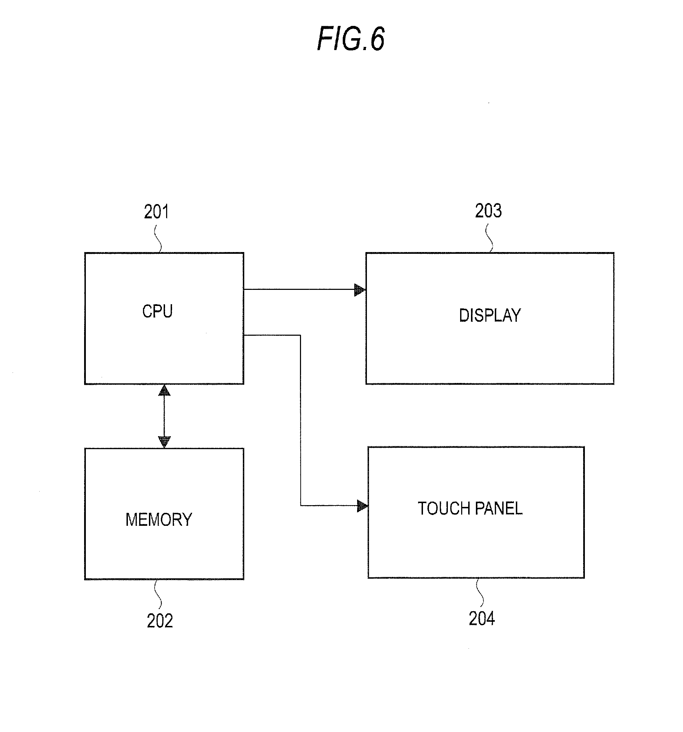

{FIG. 1} A diagram illustrating a screen transition using touch panel input associated with background-art.
{FIG.2} A block diagram showing one exemplary embodiment of an electronics device using touch panel input according to the present invention.
{FIG. 3} A flowchart illustrating an operation of the exemplary embodiment of FIG. 1.
{FIG. 4} A diagram illustrating a specific example of a screen transition associated with touch panel input according to the exemplary embodiment of FIG. 1.
{FIG. 5} A diagram showing an operation of dragging between a plurality of action areas displayed.
{FIG. 6} A block diagram showing a configuration when an electronics device using touch panel input of the present invention is made with the use of a computer.

### {Description of Exemplary Embodiments}

The following describes in detail an exemplary embodiment for carrying out the invention with reference to the accompanying drawings. FIG. 2 is a block diagram showing one exemplary embodiment of an electronics device using touch panel input according to the present invention. As shown in FIG. 2, a controller 101 is connected to a display 105 and a touch panel 106.

On the display 105, a touch panel 106 is placed as an input device, making it possible to carry out an input operation using a finger, touch pen, or the like. According to the present exemplary embodiment, as described below, a user uses a finger, touch pen, or the like to carry out a series of consecutive operations involving touch/drag/release to the touch panel 106, thereby making it possible to execute various actions.

The controller 101 controls the displaying of the display 105. The controller 101 also accepts the displaying of an action area corresponding to a touched area of the touch panel 106 and the selection and execution of an action in accordance with a series of consecutive operations by a user for the touch panel 106 involving touch operation, drag operation, and release operation.

An action extraction unit 103 receives a signal that indicates an area of the touch panel 104 touched by the user, and then extracts one or more actions corresponding to the touched area. A display control unit 102 displays, around the touched area and on the display 105, one or more action areas corresponding to the one or more actions extracted. Following the touch operation, a user performs a drag operation to any one of the action areas around the touched area. After the drag operation, the user performs a release operation. An execution initiation unit 104 selects the action area in response to the drag operation that is performed after the touch operation. After that, in response to the release operation, the execution initiation unit 104 starts executing an action corresponding to the selected action area. Incidentally, according to the present exemplary embodiment, even in the case of one action area, the drag operation and then the release operation are performed. Because the drag operation and then the release operation are performed even in the case of one action area, compared with the case where an action is disclosed in response to the release after one action area is displayed on a touched area, a malfunction that occurs as a touched area is accidentally touched can be eliminated. According to the present exemplary embodiment, a plurality of action areas corresponding to an area (object) selected by a user's touch operation are displayed around the touched area. In response to the drag that is performed after the touch operation, an action area is selected. Furthermore, in response to the release operation, the selected action is determined. Accordingly, in a series of consecutive operations from the touch operation to the release operation, an operation of extracting action areas on the basis of a touched area, an operation of displaying action areas, an operation of selecting an action, and an operation of initiating the execution of the action can be performed easily, resulting in a remarkable improvement in operability.

According to the present exemplary embodiment, around the touched area, one or more action areas corresponding to one or more actions extracted are displayed on the display 105. When two or more actions are extracted, the action areas may be displayed not only around the touched area but also on the touched area. When an action area is displayed on the touched area, the execution of an action will start after the release operation is performed in the action area displayed on the touched area.

FIG. 3 is a flowchart illustrating an operation of the present exemplary embodiment. FIGS. 4 and 5 are diagrams illustrating a specific example of a screen transition associated with touch panel input. In FIGS. 3 to 5, an example of displaying action areas around a touched area, as well as on the touched area, will be explained. If an action area is not displayed on the touched area, steps S103 and S104 of FIG. 3 are unnecessary; an "opening" action of FIG. 4 is displayed around a touched area, not on the touched area.

According to the present exemplary embodiment, a WEB page that has a link destination displayed on a browser is used as an example for explanation. The process of the flowchart shown in FIG. 3 is a process executed by the controller 101. First, after a hyperlink destination (which is "here" encircled by dotted line in FIG. 4) that is among the contents displayed on a display screen 11, which is displayed by the display 105 through the touch panel 106, is touched (or selected) by a user using a finger, touch pen, or the like, the action extraction unit 103 of the controller 101 detects the touch in response to a signal from the touch panel 106 (Step S100), and extracts a plurality of actions corresponding to the link (Step S101). The display control unit 102 carries out display control so that a plurality of executable action areas are displayed on the touched area, as well as around the touched area, by the display 105 (Step S 1 02).

An exemplary embodiment for extracting a plurality of actions at the time will be described. For example, the action extraction unit 103 prepares in advance the following table on a memory: a table on which actions, such as "Opening a linked page,'' "Switching what is displayed to a linked page," "Displaying a linked page in a new window," and "Bookmarking a linked page," are associated with the place of a link of the WEB page.

Moreover, for example, the action extraction unit 103 prepares in advance the following table on a memory: a table on which actions, such as "Opening an image," "Switching what is displayed to an image," "displaying an image in a new window," and "Saving an image," are associated with the place of an image of the WEB page. The action extraction unit 103 switches between those to be extracted depending on whether the touched position on the touch panel 104 is the place of a link, the place of an image, or the like. When the place of a link of a WEB page ("from here" in FIG. 4) is touched, the action extraction unit 103 extracts an action from the table. Incidentally, the "place of an image of a WEB page" is not shown in FIG. 4; the "place of an image of a WEB page" is based on the assumption that, for example, when there is an image in the WEB page of FIG. 4, the image is touched.

In the example of FIG. 4, after the "place of a link (from here)" is touched on the display screen 11, a plurality of actions including not only the corresponding "Opening'' but also "Opening in a new window," "Bookmarking)," and the like are extracted from the table that is prepared in advance. Then, on a display screen 14 of the display 105, the display control unit 102 controls the display 105 to display "Opening" on the touched position, and a plurality of action areas such as "Opening in a new window" and "Bookmarking" around the touched area. At this time, as shown in FIG. 4, a plurality of executable action areas are radially displayed around the touched area. That is, a plurality of executable action areas 15 are radially displayed with the touched area as the center thereof. Moreover, on the touched area that is being touched, what is displayed is an action area where a selection and determination operation of the most frequently used will be performed; and around the action area, a plurality of action areas extracted are displayed.

That is, as shown in FIG. 4, on the touched area that is being touched, "Opening," which indicates "Opening a linked page," is displayed. If a user just releases the finger or the like without dragging after the touch operation by a touching finger or the like, the execution initiation unit 104 of the controller 101 detects the release in response to a signal from the touch panel 106 (the release of step S 103), and assumes that a linked page has been determined. As a result, the execution initiation unit 104 of the controller 101 displays the contents of the linked page on the display 105 (Step S104). That is, when the user chooses (touches and releases) "Opening," the linked page is displayed on the display 105 as in the case of the display screen 12. At this time, it is preferred that the action area be displayed as a semi-transparent image and be superimposed on the original image.

As shown in FIG. 5, a touching finger or the like is just dragged by the user from the touched area to an area of a to-be-executed action, the execution initiation unit 104 of the controller 101 detects the drag in response to a signal from the touch panel 106 (the drag of step S103), and selects an action corresponding to the dragged action area (Step S105). Then, when the action area is being selected, a user releases the finger or the like from the selected action area, and the execution initiation unit 104 detects the release in response to a signal from the touch panel 106 (Step S 106). As a result, the action is executed (Step S 107).

In this manner, in accordance with a series of consecutive operations by the user for the touch panel 104 involving touch operation, drag operation, and release operation, the controller 101 accepts the displaying of action areas corresponding to a touched area on the touch panel 104 at the time of touch operation by the user; the selection of an action area from among the displayed action areas; and the execution of an action corresponding to the selected action area.

In the example of FIG. 5, from the situation where a user touches "Opening'' as indicated by dotted line, the drag is performed to "Bookmarking." Then, ``Bookmarking'' is selected. Furthermore, when the user releases the finger or the like at the position of ``Bookmarking," a linked page is then registered in a bookmark list while being selected.

According to the present exemplary embodiment, a plurality of action areas corresponding to an area (object) selected by the user's touch operation are displayed around the touched area. In response to the drag that is performed after the touch operation, an action area is selected. Furthermore, in response to the release operation, the selected action is determined. Accordingly, in a series of consecutive operations from the touch operation to the release operation, an operation of extracting action areas on the basis of a touched area, an operation of displaying the action areas, an operation of selecting an action, and an operation of starting executing the action can be performed easily, resulting in a remarkable improvement in operability.

Incidentally, according to the above exemplary embodiment, the following has been described: Immediately after a touched area is touched by a user, a plurality of executable actions are displayed around the touched area. However, if the visibility of a plurality of action areas becomes poor, a plurality of action areas may be displayed after a predetermined drag time, which is set in advance, has passed. According to the present invention, still other various exemplary embodiments are available. For example, there is the following exemplary embodiment: the action extraction unit 103 of the controller 101 measures the frequency of a selected action; on the basis of the measurement results, the display control unit displays the most frequently selected action in a drag-unnecessary area (touched area); and around the most frequently selected action, for example, the display control unit arranges actions in descending order of frequency in an upper area, a right-hand area, a lower area, and then a left-side area. That is, there is the exemplary embodiment in which the action areas are arranged along a predetermined direction in descending order of frequency around the touched area.

Furthermore, instead of displaying action areas after the panel is touched for a predetermined period of time or more, the display control unit 102 may display action areas, for example, after the panel is double-touched. The display control unit 102 may display semi-transparent action areas as described above. Furthermore, there is also the following exemplary embodiment: a countermeasure for accidental touch is taken by stopping the displaying of action areas to prohibit an action area from being selected when the panel continues to be touched in the situation where action areas are displayed for a predetermined period of time.

At this time, the execution initiation unit 104 may measure the drag time at the time of drag operation from the touched area to a displayed action area, or the release time at the time of release operation from a selected action area. When a predetermined period of drag time or more, or a predetermined period of release time or more, has been required, the execution initiation unit 104 may determine that there have been some operational errors, and disable the drag operation or the release operation.

Incidentally, as for an electronics device using touch panel input of the above exemplary embodiments, an example in which the electronics device is realized by hardware has been explained. However, the electronics device using touch panel input may also be realized by a computer that reads, from a computer-readable recording medium, a program that enables the computer to function as an information processing system thereof, and then executes the program. Moreover, the electronics device may also be realized by executing the program after the program is downloaded via a communication network such as the Internet and stored in a storage unit such as a flash memory.

Moreover, as for an operational method of the electronics device using touch panel input of the above exemplary embodiments, an example in which the operational method is realized by hardware has been described. However, the operational method of the electronics device using touch panel input may be realized by a computer that reads, from a computer-readable recording medium, a program that enables the computer to carry out the method, and then executes the program. Moreover, the operational method may also be realized by executing the program after the program is downloaded via a communication network such as the Internet and stored in a storage unit such as a flash memory.

FIG. 6 is a block diagram showing a configuration when an electronics device using touch panel input of the present invention is made with the use of a computer. In the diagram, a reference numeral 201 represents a CPU, which controls each component in the electronics device; a reference numeral 202 represents a memory; a reference numeral 203 represents a display for displaying screens, such as a liquid crystal display device; and a reference numeral 204 represents a touch panel, which is disposed on the display 203.

On the display 203, the touch panel 204 is disposed as an input device, allowing input operation to be carried out with a finger, touch pen, or the like. According to the present exemplary embodiment, as a user uses a finger, touch pen, or the like to carry out a series of consecutive operations involving touch/drag/release to the touch panel 204, various actions are executed. Programs, which are executed by the CPU 201, are stored in the memory 202. Moreover, data, which are required for the CPU 201 to perform arithmetic processing, are stored in the memory 202. The memory 202 may be divided into a memory, such as ROM, which stores programs, and a memory, such as RAM, which stores data required for arithmetic processing. The program executes a flowchart, such as that shown in FIG. 3. If an action area is not displayed on a touched area, steps S103 and S104 of FIG. 3 are unnecessary. The above-described exemplary embodiments are preferred exemplary embodiments of the present invention. However, the scope of the present invention is not limited only to the above-described exemplary embodiments. The present invention may be embodied with various modifications made thereto without departing from the subject matter of the present invention. Therefore, the exemplary embodiments described above each are to be considered as illustrative, not restrictive. The scope of the invention is indicated by the appended claims, and not restricted by the specification and abstract. Furthermore, all variations and modifications which come within the meaning and range of equivalency of the claims are intended to be embraced within the scope of the present invention.

The present application claims priority from Japanese Patent Application No. 2010-124623 filed on May 31, 2010, the entire contents of which are incorporated herein by reference.

The whole or part of the exemplary embodiments disclosed above can be described as, but not limited to, the following supplementary notes.

### (Supplementary note 1)

An electronics device using touch panel input, comprising:
a display which displays a screen;
a touch panel which is disposed on the display; and
a controller which controls the display so that one or more action areas corresponding to a touched area of the touch panel are displayed in response to touch operation onto the touch panel, and which accepts selection of the action area from among the one or more action areas displayed and execution of an action corresponding to the action area, in accordance with drag and release operations that come after the touch operation.

### (Supplementary note 2)

The electronics device using touch panel input according to supplementary note 1, wherein the controller includes:
an action extraction unit which extracts one or more actions corresponding to the touched area of the touch panel;
a display control unit which controls the display so that one or more action areas corresponding to the one or more actions extracted are displayed around the touched area; and
an execution initiation unit which selects an action area in response to drag operation to any one of the action areas, the drag operation following the touch operation, and which starts executing a selected action in response to release operation from the selected action area, the release operation following the drag operation.

### (Supplementary note 3)

The electronics device using touch panel input according to supplementary note 2, wherein the display control unit displays, on the touched area, an action area used for selection and determination corresponding to the touched area, and displays, around the touched area, one or more action areas extracted by the action extraction unit.

### (Supplementary note 4)

The electronics device using touch panel input according to supplementary note 2, wherein the display control unit radially displays, on the display, the one or more action areas extracted, centering on the touched area.

### (Supplementary note 5)

The electronics device using touch panel input according to supplementary note 2, wherein the display control unit displays, on the display, the one or more action areas after a predetermined period of time has passed since the touch operation.

### (Supplementary note 6)

The electronics device using touch panel input according to any one of supplementary notes 2 to 5, wherein the display control unit displays, on the display, the one or more action areas extracted so that the one or more action areas are semi-transparently displayed.

### (Supplementary note 7)

The electronics device using touch panel input according to any one of supplementary notes 2 to 5, wherein the display control unit displays, on the touched area, an action area that is most frequently selected by the drag operation, and displays, around the touched area, the action areas along a predetermined direction in descending order of frequency.

### (Supplementary note 8)

The electronics device using touch panel input according to any one of supplementary notes 2 to 5, wherein the display control unit displays the action areas on the display after the panel is touched a predetermined number of times at the time of the touch operation.

### (Supplementary note 9)

The electronics device using touch panel input according to any one of supplementary notes 2 to 5, wherein, if the touched area is touched for a predetermined period of time or more when the action areas are being displayed on the display, the display control unit stops the displaying of the action areas to prohibit actions from being selected.

### (Supplementary note 10)

The electronics device using touch panel input according to any one of supplementary notes 2 to 5, wherein, if drag time at the time of the drag operation, or release time at the time of the release operation, is greater than or equal to a predetermined period of time, the execution initiation unit disables the drag or release operation.

### (Supplementary note 11)

An operation accepting method of an electronics device using touch panel input, which includes a display that has a display screen, a touch panel that is disposed on the display, and a controller that is connected to the display and the touch panel, the method comprising:
an operation accepting step of controlling, by the controller, the display so that one or more action areas corresponding to a touched area of the touch panel are displayed in response to touch operation onto the touch panel, and accepting, by the controller, selection of the action area from among the one or more action areas displayed and execution of an action corresponding to the action area, in accordance with drag and release operations that come after the touch operation.

### (Supplementary note 12)

The operation accepting method of the electronics device using touch panel input according to supplementary note 11, wherein the operation accepting step includes: an extraction step of extracting one or more actions corresponding to the touched area at the time of touch operation onto the touch panel;
a display step of displaying, around the touched area, one or more action areas corresponding to the one or more actions extracted; and
an execution initiation step of selecting an action in response to drag operation to any one of the action areas, the drag operation following the touch operation, and starting executing a selected action in response to release operation from the selected action area, the release operation following the drag operation.

### (Supplementary note 13)

The operation accepting method of the electronics device using touch panel input according to supplementary note 12, wherein, at the display step, an action area used for selection and determination corresponding to the touched area is displayed on the touched area, and one or more action areas extracted by the extraction step are displayed around the touched area.

### (Supplementary note 14)

The operation accepting method of the electronics device using touch panel input according to supplementary note 12, wherein, at the display step, the one or more action areas extracted are radially displayed on the display, centering on the touched area.

### (Supplementary note 15)

The operation accepting method of the electronics device using touch panel input according to supplementary note 12, wherein, at the display step, the one or more action areas are displayed on the display after a predetermined period of time has passed since the touch operation.

### (Supplementary note 16)

The operation accepting method of the electronics device using touch panel input according to any one of supplementary notes 12 to 15, wherein, at the display step, the one or more action areas extracted are semi-transparently displayed.

### (Supplementary note 17)

The operation accepting method of the electronics device using touch panel input according to any one of supplementary notes 12 to 15, wherein, at the display step, an action area that is most frequently selected by the drag operation is displayed on the touched area, and the action areas are displayed along a predetermined direction in descending order of frequency around the touched area.

### (Supplementary note 18)

The operation accepting method of the electronics device using touch panel input according to any one of supplementary notes 12 to 15, wherein, at the display step, the action areas are displayed on the display after the panel is touched a predetermined number of times at the time of the touch operation.

### (Supplementary note 19)

The operation accepting method of the electronics device using touch panel input according to any one of supplementary notes 12 to 15, wherein, if the touched area is touched for a predetermined period of time or more when the action areas are being displayed on the display, the displaying of the action areas is stopped at the display step to prohibit actions from being selected.

### (Supplementary note 20)

The operation accepting method of the electronics device using touch panel input according to any one of supplementary notes 12 to 15, wherein, if drag time at the time of the drag operation or release time at the time of the release operation is greater than or equal to a predetermined period of time, the drag or release operation is disabled at the execution initiation step.

### (Supplementary note 21)

A program that causes a computer to function as the controller described in any one of supplementary notes 1 to 10.

### {Industrial Applicability}

The present invention can be used for an electronics device using touch panel input. For example, the present invention can be suitably used for operation of a home page having links in a browser function having a touch panel.

### {Reference Signs List}

- 101:: Controller
- 102:: Display control unit
- 103:: Action extraction unit
- 104:: Execution initiation unit
- 105:: Display
- 106:: Touch panel

## Claims

1. An electronics device using touch panel input, comprising:
a display which displays a screen;
a touch panel which is disposed on the display; and
a controller which controls the display so that one or more action areas corresponding to a touched area of the touch panel are displayed in response to touch operation onto the touch panel, and which accepts selection of the action area from among the one or more action areas displayed and execution of an action corresponding to the action area, in accordance with drag and release operations that come after the touch operation.

2. The electronics device using touch panel input according to claim 1, wherein the controller includes:
an action extraction unit which extracts one or more actions corresponding to the touched area of the touch panel;
a display control unit which controls the display so that one or more action areas corresponding to the one or more actions extracted are displayed around the touched area; and
an execution initiation unit which selects an action area in response to drag operation to any one of the action areas, the drag operation following the touch operation, and which starts executing a selected action in response to release operation from the selected action area, the release operation following the drag operation.

3. The electronics device using touch panel input according to claim 2, wherein the display control unit displays, on the touched area, an action area used for selection and determination corresponding to the touched area, and displays, around the touched area, one or more action areas extracted by the action extraction unit.

4. The electronics device using touch panel input according to claim 2, wherein the display control unit radially displays, on the display, the one or more action areas extracted, centering on the touched area.

5. The electronics device using touch panel input according to claim 2, wherein the display control unit displays, on the display, the one or more action areas after a predetermined period of time has passed since the touch operation.

6. An operation accepting method of an electronics device using touch panel input, which includes a display that has a display screen, a touch panel that is disposed on the display, and a controller that is connected to the display and the touch panel, the method comprising:
an operation accepting step of controlling, by the controller, the display so that one or more action areas corresponding to a touched area of the touch panel are displayed in response to touch operation onto the touch panel, and accepting, by the controller, selection of the action area from among the one or more action areas displayed and execution of an action corresponding to the action area, in accordance with drag and release operations that come after the touch operation.

7. The operation accepting method of the electronics device using touch panel input according to claim 6, wherein the operation accepting step includes:
an extraction step of extracting one or more actions corresponding to the touched area at the time of touch operation onto the touch panel;
a display step of displaying, around the touched area, one or more action areas corresponding to the one or more actions extracted; and
an execution initiation step of selecting an action in response to drag operation to any one of the action areas, the drag operation following the touch operation, and
starting executing a selected action in response to release operation from the selected action area, the release operation following the drag operation.

8. The operation accepting method of the electronics device using touch panel input according to claim 7, wherein, at the display step, an action area used for selection and determination corresponding to the touched area is displayed on the touched area, and one or more action areas extracted by the extraction means are displayed around the touched area.

9. The operation accepting method of the electronics device using touch panel input according to claim 7, wherein, at the display step, the one or more action areas extracted are radially displayed on the display, centering on the touched area.

10. The operation accepting method of the electronics device using touch panel input according to claim 7, wherein, at the display step, the one or more action areas are displayed on the display after a predetermined period of time has passed since the touch operation.
